# EUROPEAN PATENT APPLICATION

(11) **EP 1 388 481 A2**
(43) Date of publication of application: **11.02.2004**
(21) Application number: 03017974.1
(22) Date of filing: 06.08.2003
(51) Int. Cl.: B62D 1/16

(54) **Steering column for a vehicle**

(30) Priority: 09.08.2002 JP 2002232249
(71) Applicant: FUJI KIKO Co., Ltd., Kosai-shi, Shizuoka 431-0431 (JP)
(72) Inventor: Shibayama, Kazuya, Kosai-shi, Shizuoka 431-0431 (JP)
(74) Representative: Grünecker, Kinkeldey, Stockmair & Schwanhäusser Anwaltssozietät

(57) **Abstract**

A steering column for a vehicle has a steering shaft (4), a column jacket (6) accommodating therein the steering shaft, upper and lower brackets (8,10) mounted on upper and lower ends of the column jacket, respectively, and upper and lower bearings (12,14) fixed to the upper and lower brackets, respectively, to support the steering shaft (4) rotatably. The column jacket (6) is integrally formed by bending a metal plate into a substantially U-shape to define a pair of opposed side walls (16) and is arranged with an opening of the U-shape facing downward.

## Description

### BACKGROUND OF THE INVENTION

The present invention relates to a steering column for a vehicle.

A vehicle steering column has a steering shaft and a column jacket accommodating therein the steering shaft. The column jacket is conventionally prepared by subjecting a steel pipe to e.g. a pipe expanding/contracting process.

### SUMMARY OF THE INVENTION

The steel pipe is usually more expensive than a metal plate. The processing of the steel pipe into the column jacket is also costly. As a result, the manufacturing cost of the column jacket becomes relatively high.

It is therefore an object of the present invention to provide a steering column whose column jacket can be easily manufactured at low cost.

According to one aspect of the invention, there is provided a steering column, comprising: a steering shaft; a column jacket accommodating therein the steering shaft, the column jacket being integrally formed by bending a metal plate into a substantially U-shape to define a pair of opposed side walls and arranged with an opening of the U-shape facing downward; upper and lower brackets mounted on upper and lower ends of the column jacket, respectively; and upper and lower bearings fixed to the upper and lower brackets, respectively, to support the steering shaft rotatably.

According to another aspect of the invention, there is provided a steering column, comprising: a steering shaft; a column jacket accommodating therein the steering shaft, the column jacket being formed into one piece and having a substantially U-shape in cross section throughout its length to define a pair of opposed side walls extending axially of the steering column; upper and lower brackets mounted on upper and lower ends of the column jacket, respectively; upper and lower bearings fixed to the upper and lower brackets, respectively, to support the steering shaft rotatably

The other objects and features of the invention will also become understood from the following description with reference to the accompanying drawings.

### BRIEF DESCRIPTION OF THE DRAWINGS

FIG. 1 is a partially sectional view of a steering column according to an embodiment of the present invention.

FIG. 2 is a plan view of the steering column, when viewed in the direction of an arrow II of FIG. 1.

FIG. 3 is a plan view of the steering column, when viewed in the direction of an arrow III of FIG. 1.

FIG. 4 is an enlarged view of part of the steering column.

FIG. 5 is a sectional view of the steering column, when taken along a line V-V of FIG. 1.

FIG. 6 is a sectional view of the steering column, when taken along a line VI-VI of FIG. 1.

### DESCRIPTION OF THE EMBODIMENT

The present invention will be described below with reference to the drawings.

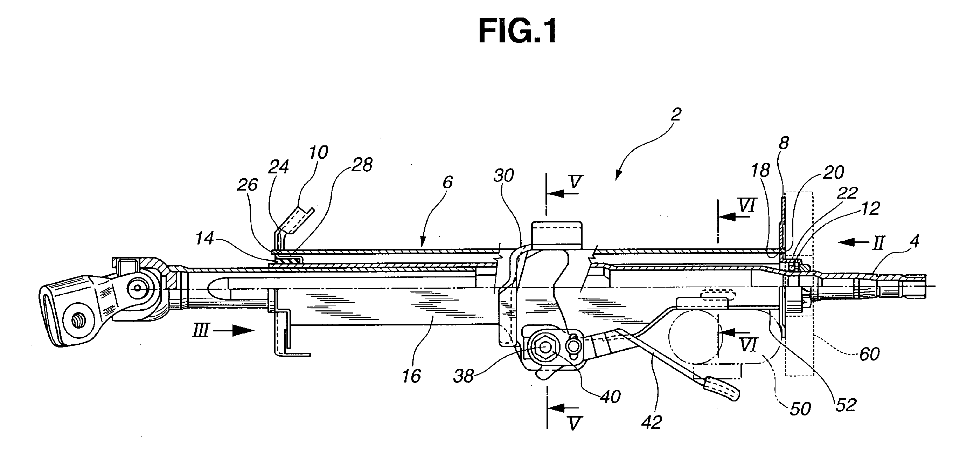

As shown in FIG. 1, a steering column 2 according to one exemplary embodiment of the present invention comprises a steering shaft 4 to which a steering wheel (not shown) is attached, an elongated column jacket 6 accommodating therein the steering shaft 4, upper and lower bracket 8 and 10 mounted on upper and lower ends of the column jacket 6, respectively, and upper and lower bearings 12 and 14 fixed to the upper and lower brackets 8 and 10, respectively, to support the steering shaft 4 rotatably. In the present embodiment, the lower bearing 14 is a rubber bushing.

The column jacket 6 is formed by press bending an elongated metal plate into a substantially U-shape to define a pair of opposed side walls extending axially of the steering column 2. More specifically, the column jacket 6 is formed into one piece so as to have a substantially U-shape in cross section throughout its length, and is arranged with an opening of the U-shape facing downward. Further, protrusions 20 and 26 are formed on the upper and lower ends of the column jacket 6, respectively.

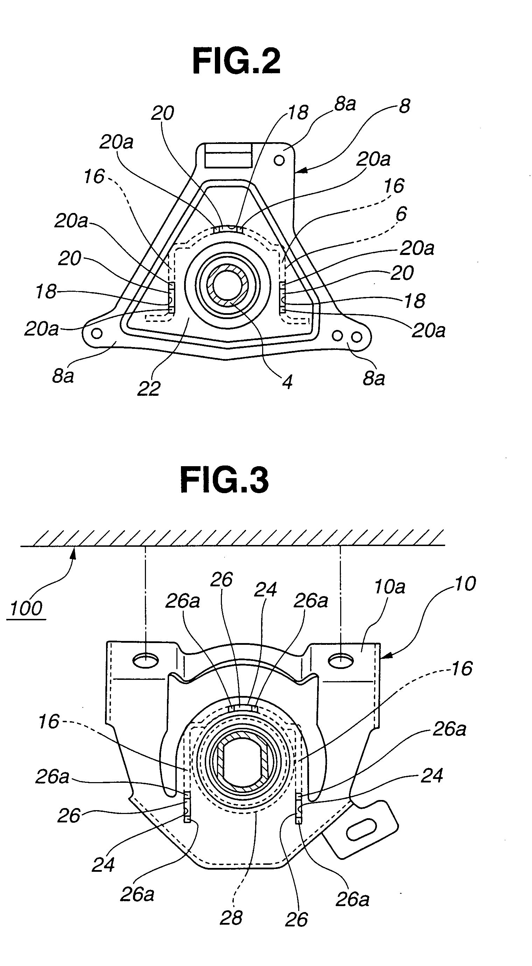

The upper bracket 8 is prepared by press forming a metal plate, and has a cylindrical portion 22 formed therein by burring. Substantially elongated rectangular recesses 18 are formed in the upper bracket 8 at positions around the cylindrical portion 22. The upper bracket 8 is mounted on the column jacket 6 with an upper end portion of the steering shaft 4 passing through the cylindrical portion 22, by engaging the protrusions 20 in the respective recesses 18 and caulking each protrusion 20 at both sides 20a thereof to the recess 18, as shown in FIGS. 1 and 2. Alternatively, the protrusions 20 may be engaged in and welded to the recesses 18, respectively.

Similarly, the lower bracket 10 is prepared by press forming a metal plate, and has a cylindrical portion 28 formed therein by burring. Substantially elongated rectangular recesses 24 are formed in the lower bracket 10 at positions around the cylindrical portion 28. The lower bracket 10 is mounted on the column jacket 6 with a lower end portion of the steering shaft 4 passing through the cylindrical portion 28, by engaging the protrusions 26 in the respective recesses 24 and caulking each protrusion 26 at both sides 26a thereof to the recess 24, as shown in FIGS. 1 and 3. Alternatively, the protrusions 26 may be also engaged in and welded to the recesses 24, respectively.

The upper bracket 8 also has a combination switch attachment portion 8a formed integrally thereon for attachment of a combination switch 60. Herein, the combination switch 60 is a unit comprised of a direction indicator, a windshield-wiper operation lever and the like, and is secured to the attachment portion 8a by screws (not shown).

The lower bracket 10 has a mounting portion 10a integrally formed thereon so as to be fixed to a vehicle body 100 by bolts (not shown) for mounting the steering column 2 on the vehicle body 100.

The upper and lower bearings 12 and 14 are press-fitted in the cylindrical portions 22 and 28, respectively. After the press-fitting of the bearings 12 and 14, open ends of the cylindrical portion 22 and 28 are caulked so as to prevent the bearings 12 and 14 from coming out of the cylindrical portions 22 and 28, respectively.

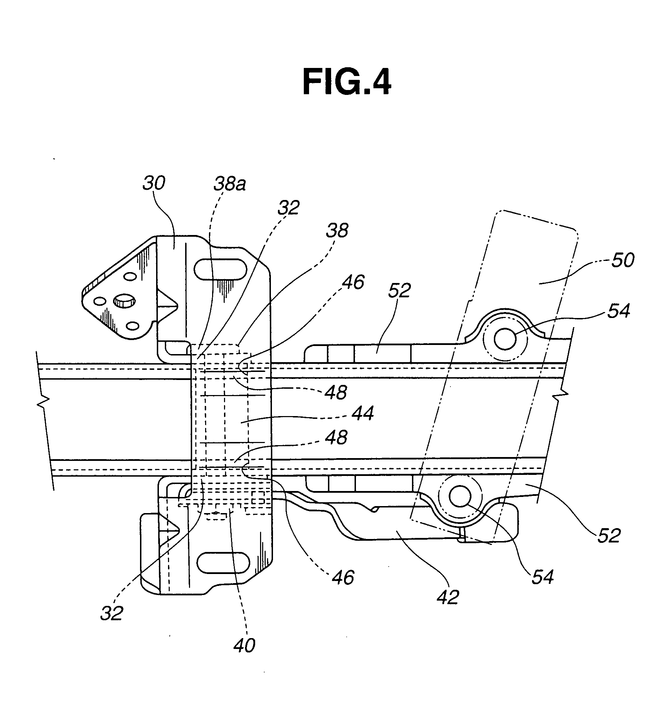

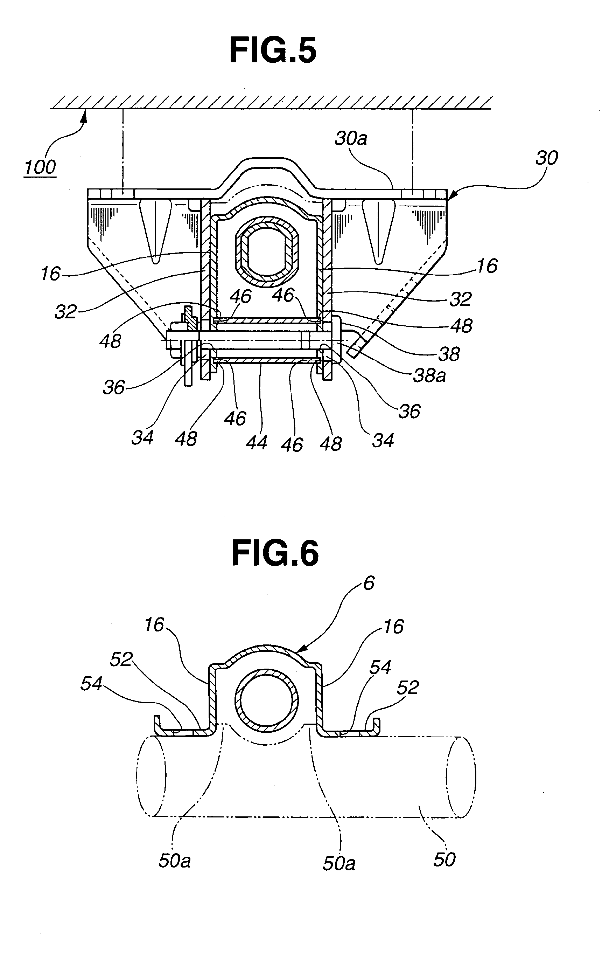

As shown in FIGS. 1, 4 and 5, the steering column 2 further comprises a fixed bracket 30, a tightening bolt 38, a nut 40, a tilt lever 42 and a reinforcing plate 44.

The fixed bracket 30 is mounted on the column jacket 6 and having a mounting portion 30a integrally formed thereon so as to be fixed to the vehicle body 100 by bolts (not shown) for mounting, together with the mounting portion 10a of the lower bracket 10, the steering column 2 on the vehicle body 10 and a pair of opposed clamping walls 32 to clamp the side walls 16 of the column jacket 6 therebetween.

The clamping walls 32 define therein a pair of opposed vertically elongated tilt holes 34, whereas the side walls 16 define therein a pair of opposed through holes. The tilt holes 34 and the through holes 36 are formed at position corresponding to each other.

The tightening bolt 38 is passed through the tilt holes 34 and the through holes 36 and fastened with the nut 40, so that a head 38a of the bolt 38 and the nut 40 allow the clamping walls 32 to clamp the side walls 16 therebetween. Further, the tilt lever 42 is secured to the nut 40.

When the tilt lever 42 is operated by a driver to loosen the nut 40, the bolt 38 is allowed to move through the tilt holes 34 such that the column jacket 6 and the steering shaft 4 tilt together to a desired tilt position, i.e. the steering wheel is adjusted to a desired position. At this time, the lower bracket 10 becomes elastically deformed to allow tilt movement of the steering shaft 4 and the column jacket 6 . After adjusting the position of the steering wheel, the tilt lever 42 is operated to tighten the nut 40. Then, the clamping walls 32 clamp the side walls 16 therebetween so as to hold the column jacket 6 against the fixed bracket 30 and thereby lock the steering shaft 4 at the desired tilt position.

The reinforcing plate 44 is fitted in the column jacket 6 so as to surround the tightening bolt 38. More specifically, the reinforcing plate 44 has a substantially U-shape in cross section and is held between the side walls 16 with its U-shape opening facing upward (i.e. toward the steering wheel).

Protrusions 48 are formed on the reinforcing plate 44, and slots 46 are formed in the side walls 16 of the column jacket 6 at positions corresponding to the protrusions 48. With this, the reinforcing plate 44 is fixed to the column jacket 6 by engaging the protrusions 48 in the slots 46, respectively. Herein, the slots 46 are shaped to fit with the protrusions 48. Alternatively, the reinforcing plate 44 may be fixed to the column jacket 6 by forming the protrusions 48 in a larger size but within the depth range of the slots 46, and then, caulking the protrusions 48 to the respective slots 46.

As shown in FIGS. 1, 4 and 6, the column jacket 6 includes flanges 52 to which a key cylinder 50 is attached. The flanges 52 are integrally formed by bending edge parts of the side walls 16, respectively, so as to extend outwardly, whereby the column jacket 6 with the flanges 52 becomes substantially hat-shaped in cross section. Through holes 54 are formed in the flanges 52, and bolts (not shown) are fixed through the through holes 54 to secure the key cylinder 50 to the column jacket 6. Boss portions 50a of the key cylinder 50 are held between the side walls 16 of the column jacket 6 so that the side walls 16 are allowed to provide additional torsional strength so as to obtain an improvement in rigidity at the joint between the column jacket 6 and the key cylinder 50.

As described above, the column jacket 6 is prepared by subjecting a metal plate to the press-bending process. This makes it possible to reduce the manufacturing cost of the column jacket 6, i.e. possible to reduce the manufacturing cost of the steering column 2, as compared to the method of forming a column jacket by subjecting a steering pipe to a pipe sizing process (such as pipe expanding and/or pipe contracting) or by cutting the inner circumferential surface of a steel pipe. Further, the parts count of the steering column 2 can reduced by forming the upper bracket 8 integral with the combination-switch attachment portion and by forming the lower bracket 10 integral with the portion for mounting on the vehicle body 100.

As the upper and lower brackets 8 and 10 are mounted on the column jacket 6 by engaging the protrusions 20 and 26 in the recesses 18 and 24 and caulking or welding the protrusions 20 and 26 to the recesses 18 and 24, respectively, the assembling of the steering column 2 can be made easy. The assembling of the steering column 2 can be made easier by caulking the protrusions 20 and 26 to the respective recess 18 and 24. In addition, it is possible to provide a further reduction in manufacturing cost as well as resource saving by fixing the upper and lower brackets 8 and 10, the clamping bracket 30 and the reinforcing plate 44 to the column jacket 6 without welding.

The tilting operation of the steering column 2 can be carried out by means of the fixed bracket 30. There is no need to employ another bracket (i.e. a so-called distance bracket) that has been conventionally used to provide a pair of parallel walls for steering-column tilting operation. Similarly, the key cylinder 50 can be mounted directly on the column jacket 6 without a separate key-cylinder mounting bracket as the flanges 52 are formed integral with the side walls 16. The manufacturing cost and parts count of the steering column 2 can be thus further reduced.

Furthermore, the fitting of the upper and lower bearings 12 and 14 in the cylindrical portions 22 and 28 of the upper and lower brackets 8 and 10 allows improvements in production yield and in workability as compared with the case of fitting bearings in both ends of a conventional steel-pipe type column jacket 6.

The entire contents of Japanese Patent Application No. 2002-232249 (filed on August 9, 2002) are herein incorporated by reference.

Although the present invention has been described with reference to a specific embodiment of the invention, the invention is not limited to the above-described embodiment. Various modification and variation of the embodiment described above will occur to those skilled in the art in light of the above teaching. The scope of the invention is defined with reference to the following claims.

## Claims

1. A steering column for a vehicle, comprising:
a steering shaft;
a column jacket accommodating therein the steering shaft, the column jacket being integrally formed by bending a metal plate into a substantially U-shape to define a pair of opposed side walls and arranged with an opening of the U-shape facing downward;
upper and lower brackets mounted on upper and lower ends of the column jacket, respectively; and
upper and lower bearings fixed to the upper and lower brackets, respectively, to support the steering shaft rotatably.

2. A steering column according to Claim 1,
each of the upper and lower brackets having a cylindrical portion through which the steering shaft is passed, and defining therein a recess at a position around the cylindrical portion, and
the column jacket having protrusions formed on the upper and lower ends thereof to be engaged in and caulked or welded to the recesses of the upper and lower brackets, respectively.

3. A steering column according to Claim 2, wherein the upper and lower bearings are fitted in the cylindrical portions of the upper and lower brackets, respectively.

4. A steering column according to Claim 2 , wherein the each of the upper and lower brackets is integrally formed from a metal plate by press forming, and the cylindrical portions of the upper and lower brackets are formed by burring.

5. A steering column according to Claim 1,
the side walls of the column jacket having a pair of opposed through holes and slots formed therein, and
the steering column further comprising:
a fixed bracket mounted on the column jacket and having a pair of opposed clamping walls to clamp the side walls therebetween, the clamping walls having a pair of vertically elongated tilt holes formed therein at positions corresponding to the through holes of the side walls,
a bolt passing through the through holes of the side walls and the tilt holes of the clamping walls, the bolt being movable through the tilt holes such that the column jacket is tilted together with the steering shaft;
a nut fitted onto the bolt to cause the clamping walls to clamp the sidewalls therebetween and thereby lock the steering shaft at a desired tilt position; and
a reinforcing plate having protrusions engaged in the slots, respectively, to be held between the side walls of the column jacket.

6. A steering column according to Claim 1, wherein the column jacket has flanges to which a key cylinder is attached, and the flanges are integrally formed by bending the respective side walls.

7. A steering column according to Claim 1,
the upper bracket having a combination switch attachment portion formed integrally thereon and to which a combination switch is attached, and
each of the lower bracket and the fixed bracket having a mounting portion integrally formed thereon and fixed to a vehicle body for mounting the steering column on the vehicle body.

8. A steering column, comprising:
a steering shaft;
a column jacket accommodating therein the steering shaft, the column jacket being formed into one piece and having a substantially U-shape in cross section throughout its length to define a pair of opposed side walls extending axially of the steering column;
upper and lower brackets mounted on upper and lower ends of the column jacket, respectively;
upper and lower bearings fixed to the upper and lower brackets, respectively, to support the steering shaft rotatably.

9. A steering column according to Claim 8, wherein the column jacket is arranged with an opening of the U-shape facing downward.

10. A steering column according to Claim 8,
each of the upper and lower brackets having a cylindrical portion through which the steering shaft is passed, and defining therein a recess at a position around the cylindrical portion, and
the column jacket having protrusions formed on the upper and lower ends thereof to be engaged in and caulked or welded to the recesses of the upper and lower brackets, respectively.

11. A steering column according to Claim 10, wherein the upper and lower bearings are fitted in the cylindrical portions of the upper and lower brackets, respectively.

12. A steering column according to Claim 8,
the side walls having a pair of opposed through holes formed therein, and
the steering column further comprising:
a fixed bracket mounted on the column jacket and having a pair of opposed clamping walls to clamp the side walls therebetween, the clamping walls having a pair of vertically elongated tilt holes formed therein at positions corresponding to the through holes of the side walls,
a bolt passing through the through holes of the side walls and the tilt holes of the clamping walls, the bolt being movable through the tilt holes such that the column jacket is tilted together with the steering shaft;
a nut fitted onto the bolt to cause the clamping walls to clamp the sidewalls therebetween and thereby lock the steering shaft at a desired tilt position; and
a reinforcing plate held between the side walls of the column jacket to surround the bolt.

13. A steering column according to Claim 6, wherein the column jacket comprises has flanges integral with the side walls, respectively, for attachment of a key cylinder.

14. A steering column according to Claim 8,
the upper bracket having a combination switch attachment portion formed integrally thereon and to which a combination switch is attached, and
each of the lower bracket and the fixed bracket having a mounting portion integrally formed thereon and fixed to a vehicle body for mounting the steering column on the vehicle body.
